# EUROPEAN PATENT APPLICATION

(11) **EP 2 345 987 A1**
(43) Date of publication of application: **20.07.2011**
(21) Application number: 11000026.2
(22) Date of filing: 04.01.2011
(51) Int. Cl.: G06Q 30/00

(54) **System and method for providing viewer identification-based advertising**

(30) Priority: 15.01.2010 US 295364 P; 18.11.2010 US 949001
(71) Applicant: Broadcom Corporation, Irvine, CA 92617 (US)
(72) Inventor: Karaoguz, Jeyhan, Irvine, CA 92606 (US); Samueli, Henry, Corona Del Mar, CA 92625 (US); Seshadri, Nambirajan, 92603 Irvine, CA 92603 (US)
(74) Representative: Jehle, Volker Armin

(57) **Abstract**

A system and method for providing viewer identification-based advertising to a media presentation device. Advertising content targeting a particular television receiver is often viewed by different users with widely varying respective interests in goods and services. In accordance with various aspects of the present invention, advertising content may be directed to a particular user since the advertising is selected and presented to the user based on the user profile and the user identification. The user profile is generated by receiving information from the user regarding advertising. The user is identified, at specific time, based on user login and/or by identifying the presence of the user actually located near the media presentation system by detecting and/or analyzing various physical aspects of the user.

## Description

### CROSS-REFERENCE TO RELATED APPLICATIONS/INCORPORATION BY REFERENCE

This patent application is related to and claims priority from provisional patent application serial number 61/295,364 filed Jan. 15, 2010, and titled "SYSTEM AND METHOD FOR PROVIDING VIEWER IDENTIFICATION-BASED ADVERTISING," the contents of which are hereby incorporated herein by reference in their entirety. This patent application is also related to U.S. Patent Application No. _/_,_, filed concurrently herewith, titled "SYSTEM AND METHOD IN A PROGRAM RECORDER FOR MANAGING ADVERTISEMENT PRESENTATION", Attorney Docket No. 21194US02; U.S. Patent Application No. _/_,_, filed concurrently herewith, titled "SYSTEM AND METHOD FOR UPDATING ADVERTISING CONTENT FOR A RECORDED PROGRAM", Attorney Docket No. 21195US02; U.S. Patent Application No. _/_,_, filed concurrently herewith, titled "SYSTEM AND METHOD FOR PROVIDING USER SPECIFICATION OF ADVERTISING CONTENT", Attorney Docket No. 21196US02; U.S. Patent Application No. _/_,_, filed concurrently herewith, titled "SYSTEM AND METHOD FOR MONITORING AND REPORTING PRESENTATION OF RECORDED ADVERTISING CONTENT", Attorney Docket No. 21197US02; and U.S. Patent Application No. _/_,_,filed concurrently herewith, titled "SYSTEM AND METHOD FOR COMMUNICATING PROGRAMMING AND ADVERTISING CONTENT THROUGH DIVERSE COMMUNICATION NETWORKS", Attorney Docket No. 21199US02. The contents of each of the above-mentioned applications are hereby incorporated herein by reference in their entirety.

### BACKGROUND OF THE INVENTION

Users are generally provided with advertising content that is associated with a particular program. Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

Various aspects of the present invention provide a system and method for providing viewer identification-based advertising, substantially as shown in and/or described in connection with at least one of the figures, as set forth more completely in the claims.

According to an aspect of the invention, a method is provided for providing viewer identification-based advertising, the method comprising:
developing an advertising profile for a user;
identifying the user utilizing a media presentation system; and
selecting advertising for presentation by the media presentation system based, at least in part, on the advertising profile for the user and the identification of the user.

Advantageously, the method further comprises presenting the selected advertising to the user.

Advantageously, said developing an advertising profile for a user comprises receiving information from the user regarding advertising.

Advantageously, the method further comprises storing the developed advertising profile in memory of user equipment.

Advantageously, said identifying the user comprises identifying the user located in a media presentation envelope.

Advantageously, said identifying the user comprises identifying the user based on user login.

Advantageously, said identifying the user comprises identifying the user at a time associated with an advertising break in media being presented to the user.

Advantageously, said identifying the user comprises identifying the user periodically.

Advantageously, said identifying the user comprises identifying the user as being nearest to the media presentation system.

Advantageously, said selecting advertising comprises selecting advertising for presentation by the media presentation system based on only a single user.

Advantageously, said selecting advertising comprises selecting advertising for presentation by the media presentation system based on respective identifications of a plurality of users.

Advantageously, said selecting advertising comprises selecting advertising for presentation by the media presentation system based, at least in part, on factors independent of the identification of the user.

Advantageously, the method further comprises acquiring the selected advertising at the media presentation system for presentation to the user, where said acquiring comprises the media presentation system requesting the selected advertising from a networked content provider.

Advantageously, the method further comprises acquiring the selected advertising at the media presentation system for presentation to the user, where said acquiring comprises the media presentation system receiving the selected advertising from a networked content provider in an unsolicited manner.

Advantageously, said developing, said identifying, and said selecting are performed by user equipment.

According to an aspect, a system is provided for providing view identification-based advertising, the system comprising:
at least one module operable to, at least:
   develop an advertising profile for a user;
   identify the user utilizing a media presentation system; and
   select advertising for presentation by the media presentation system based, at least in part, on the advertising profile for the user and the identification of the user.

Advantageously, said at least one module is operable to present the selected advertising to the user.

Advantageously, said at least one module is operable to develop an advertising profile for a user by, at least in part, operating to receive information from the user regarding advertising.

Advantageously, said at least one module is operable to store the developed advertising profile in memory of user equipment.

Advantageously, said at least one module is operable to identify the user by, at least in part, operating to identify the user located in a media presentation envelope.

Advantageously, said at least one module is operable to identify the user by, at least in part, operating to identify the user based on user login.

Advantageously, said at least one module is operable to identify the user by, at least in part, operating to identify the user at a time associated with an advertising break in media being presented to the user.

Advantageously, said at least one module is operable to identify the user by, at least in part, operating to identify the user periodically.

Advantageously, said at least one module is operable to identify the user by, at least in part, operating to identify the user as being nearest to the media presentation system.

Advantageously, said at least one module is operable to select advertising by, at least in part, operating to select advertising for presentation by the media presentation system based on only a single user.

Advantageously, said at least one module is operable to select advertising by, at least in part, operating to select advertising for presentation by the media presentation system based on respective identifications of a plurality of users.

Advantageously, said at least one module is operable to select advertising by, at least in part, operating to select advertising for presentation by the media presentation system based, at least in part, on factors independent of the identification of the user.

Advantageously, the at least one module is operable to acquire the selected advertising at the media presentation system for presentation to the user by, at least in part, operating to request the selected advertising from a networked content provider.

Advantageously, the at least one module is operable to acquire the selected advertising at the media presentation system for presentation to the user by, at least in part, operating to receive the selected advertising from a networked content provider in an unsolicited manner.

Advantageously, said system is user equipment.

These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 shows a non-limiting exemplary flow diagram of a method for providing user identification-based advertising content selection, in accordance with various aspects of the present invention.

Figure 2 shows a non-limiting exemplary flow diagram of a method for providing user identification-based advertising content presentation, in accordance with various aspects of the present invention.

Figure 3 is a diagram illustrating an exemplary media content distribution environment.

Figure 4 is a diagram illustrating various non-limiting aspects of exemplary user equipment, in accordance with various aspects of the present invention.

Figure 5 is a diagram illustrating exemplary modules and/or sub-modules for user equipment, in accordance with various aspects of the present invention

### DETAILED DESCRIPTION OF VARIOUS ASPECTS OF THE INVENTION

The following discussion will refer to various communication modules, components or circuits. Such modules, components or circuits may generally comprise hardware and/or a combination of hardware and software (e.g., including firmware). Such modules may also, for example, comprise a computer readable medium (e.g., a non-transitory medium) comprising instructions (e.g., software instructions) that, when executed by a processor, cause the processor to perform various functional aspects of the present invention. Accordingly, the scope of various aspects of the present invention should not be limited by characteristics of particular hardware and/or software implementations of a module, component or circuit unless explicitly claimed as such. For example and without limitation, various aspects of the present invention may be implemented by one or more processors (e.g., a microprocessor, digital signal processor, baseband processor, microcontroller, etc.) executing software instructions (e.g., stored in volatile and/or non-volatile memory). Also for example, various aspects of the present invention may be implemented by an application-specific integrated circuit ("ASIC") and/or other hardware components.

Additionally, the following discussion will refer to various system modules (e.g., user equipment modules). It should be noted that the following discussion of such various modules is segmented into such modules for the sake of illustrative clarity. However, in actual implementation, the boundaries between various modules may be blurred. For example, any or all of the functional modules discussed herein may share various hardware and/or software components. For example, any or all of the functional modules discussed herein may be implemented wholly or in-part by a shared processor executing software instructions. Additionally, various software sub-modules that may be executed by one or more processors may be shared between various software modules. Accordingly, the scope of various aspects of the present invention should not be limited by arbitrary boundaries between various hardware and/or software components, unless explicitly claimed.

The following discussion may also refer to communication networks and various aspects thereof. For the following discussion, a communication network is generally the communication infrastructure through which a communication device (e.g., a video recorder, a personal video recorder, an electronic device with video presentation capability, a television receiver, a television, a television controller, a portable communication device, a video content provider, a television program provider, an advertising video provider, a data network communication service provider, etc.) may communicate with other systems. For example and without limitation, a communication network may comprise a cable and/or satellite television communication network, a cellular communication network, a telecommunication network, a general data communication network (e.g., the Internet) a wireless metropolitan area network (WMAN), a wireless local area network (WLAN), a wireless personal area network (WPAN), any home or premises communication network, etc. A particular communication network may, for example, generally have a corresponding communication protocol according to which a device (e.g., user equipment comprising an electronic device with video recording capability) may communicate with the communication network. Unless so claimed, the scope of various aspects of the present invention should not be limited by characteristics of a particular type of communication network and/or communication protocol.

Additionally, the following discussion will at times refer to media content, video content and audio content being non-limiting examples of media content. Such media content may, for example, comprise various types of television (or radio) programming (*e.g*., television programs, news programs, sports programs, music television, movies, television series programs, educational programs, live or recorded television programming, broadcast/multicast/unicast television programming, etc.). Such media content may, for example, comprise real-time television (or radio) broadcast programming (or multicast or unicast television programming) and/or user-stored television programming that is stored in user equipment (e.g., a VCR, PVR, etc.). Such media content may also, for example, comprise advertising media content (e.g., a video commercial, an audio commercial, a still image advertisement, a user-interactive advertisement, advertising content embedded in and/or separate from television programming, etc.). Such media content may also, for example, comprise graphical and/or textual content that may be displayed on a television screen (e.g., an electronic program guide, user interface menu, a television set-up menu, a typical web page, a document, a graphical video game, etc.).

Users are often provided with advertising content associated with a presented television program in a one-to-one relationship. Characteristics of such advertising content may, for example, vary with respect to the corresponding program and/or type of program with which such advertising content is presented. For example, football programming is often accompanied with beer and truck commercials, late night talk shows are often associated with adult-oriented advertisements, afternoon soap operas are often associated with domestic care products.

In such scenarios, users are subjected to advertising content based on gross generalizations about user interest associated with the programming. In reality, however, a substantial amount of users viewing a particular program may not fit the stereotyping utilized by programming providers to target advertisements to user groups. Thus, advertising is presented to a user, where such advertising has little or no relevance to such user.

Additionally, parents have little control over the type of advertising content viewed by their children. For example, parents watching football with their children will necessarily subject their children to beer commercials. Parents watching late night television (whether in real-time or in a time-shifted manner) will subject their children to advertisements for adult-oriented products. In other words, a child viewing a same program as a parent will be subjected to advertising content that a parent may deem inappropriate to the child.

Even in a hypothetical scenario in which advertising content is targeted to a particular television receiver (or other content receiving and/or presenting apparatus), such television receiver is often utilized by different users with widely varying respective interests in goods and services. In accordance with various aspects of the present invention, advertising content may be directed to a particular user. Various aspects of the present invention may, for example in user equipment (e.g., an electronic device comprising video playing capability), comprise developing an advertising profile for a user, identifying the user utilizing a media presentation system, and selecting advertising for presentation by the media presentation system based at least in part on the advertising profile for the user and the identification of the user. Note that in alternative embodiments any or all of the functionality discussed herein may also be performed by equipment associated with video content sources and/or communicators.

The following discussion will provide various non-limiting examples of respective aspects of the present invention. Accordingly, the scope of various aspects of the present invention should not be limited by characteristics of such non-limiting examples unless explicitly claimed.

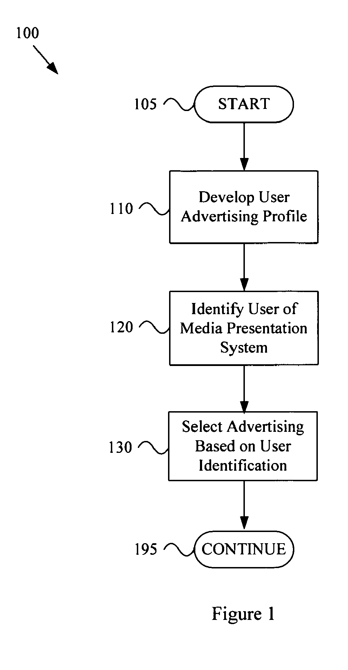

Turning first to Figure 1, such figure shows a non-limiting exemplary flow diagram of a method 100 for providing user identification-based advertising content selection, in accordance with various aspects of the present invention. Any or all aspects of the exemplary method 100 may, for example, be implemented in user equipment (e.g., a personal video recorder, a television receiver (or set top box) with or without video recording capability, a gaming device, a personal computing device (e.g., handheld, notebook, laptop, desktop, etc.), etc.). Also, as mentioned above, any or all aspects of the exemplary method 100 may be performed by non-user equipment (*e.g*., network video content server apparatus, communication network infrastructure apparatus, etc.). Also note that any or all steps of the exemplary method 100 may be performed while media content (e.g., a television program) is being presented.

The exemplary method 100 may begin executing at step 105. The method 100 may begin executing in response to any of a variety of causes and/or conditions, non-limiting examples of which will now be provided. For example, the exemplary method 100 may begin executing in response to a received user input command to immediately specify advertising characteristics to be associated with the user (e.g., for a single television viewing session, for a continual (or standing) advertising profile specifically associated with the user for all media sessions, etc.). Also for example, the exemplary method 100 may begin executing in response to a timer (e.g., periodically). Additionally for example, the exemplary method 100 may begin executing in response to resetting (or initially configuring) operation of apparatus implementing the method 100. Further for example, the exemplary method 100 may begin executing in response to receiving a request from a media content provider (e.g., a television program provider, an advertising content provider, etc.)

The exemplary method 100 may, for example at step 110, comprise developing an advertising profile for a user. For example, step 110 may comprise developing a user advertising profile in any of a variety of manners, non-limiting examples of which will be presented below.

Though the following discussion will generally focus on a respective advertising profile for a particular user, various aspects also extend to multi-user scenarios. For example, a plurality of respective advertising profiles may be created for a plurality of respective users. Also for example, an advertising profile may be created for a plurality of specifically identified users.

Step 110 may comprise developing an advertising profile by explicitly interacting with a user (e.g., the subject user of the advertising profile) with regard to defining such advertising profile. In such manner, a user may maintain complete control over the content in the user's respective advertising profile(s). Additionally, step 110 may comprise interacting with a first user regarding the advertising profile for a second user. In such manner, a parent may, for example, define an advertising profile for a child.

For example, step 110 may comprise providing a user interface by which a user may input characteristics of advertising content desired (or allowed) and/or undesired (or not allowed) by the user, where such information may then be incorporated into the user's advertising profile. For exemplary characteristics, the reader is referred to related U.S. Patent Application No. _/__,__, filed concurrently herewith, titled "SYSTEM AND METHOD FOR PROVIDING USER SPECIFICATION OF ADVERTISING CONTENT", Attorney Docket No. 21196US02, which is hereby incorporated herein in its entirety by reference.

Such a user interface may comprise user interface features by which a user may input (or specify) information regarding any of a variety of characteristics of advertising content, which may be incorporated into an advertising profile for a user. Non-limiting examples of such advertising content characteristics will now be provided.

For example, the user may input information regarding a specific type of product, a specific product, a particular provider (or source) of an advertised product, a general style (or type) of advertising content, a specific advertisement, a time window associated with particular advertising content, a priority associated with particular advertising content, etc.

Note that the exemplary input characteristics discussed above may be input by the user separately, but may also be input by the user in any combination thereof. For example, step 110 may comprise providing a user with a user interface by which the user may aggregate any one or more of the above-mentioned characteristics.

For example, in a non-limiting exemplary scenario, the user may specify that, during a first time window, only family-friendly advertisements concerning toys and healthy foods are to be presented to the user. Such scenario may also comprise the user specifying that during a late-night time window, only humorous advertisements, adult-oriented advertisements and other particular identified advertisements are to be presented to the user. Such scenario may further comprise the user specifying that at all other times, advertisements for automobiles and home appliances are preferred over advertisements for health care products, but that health care products are still allowable.

Step 110 may also, for example, comprise developing the advertising profile automatically (i.e., without explicit user interaction regarding the contents of such profile). For example, step 110 may comprise monitoring programming and/or advertising presentation to the user (or group of identified users, etc.), and may also comprise monitoring programming and/or advertising consumption by the user.

Such monitoring may, for example, comprise identifying advertising content that is presented to the user for which the user does not leave a media presentation envelope, identifying advertising content through which the user does not fast-forward, identifying advertising content during which the user does not change channels, etc.

Step 110 may also, for example, comprise developing the advertising profile utilizing a combination of direct user interaction (e.g., as discussed above) and automatic techniques (e.g., as discussed above). For example, step 110 may comprise interacting with the user to identify desired and/or undesired advertising characteristics, and the system may also monitor user media consumption activities to obtain additional information about the user's media consumption (e.g., advertisement viewing) habits. Such manually-obtained and automatically-obtained advertising information may then both be incorporated into the advertising profile. Thus, step 110 may comprise developing an advertising profile by considering advertising preferences explicitly identified by a user and by considering actual programming and/or advertising consumption by a user.

In such a scenario, step 110 may, for example, comprise providing the user the ability to review and/or override advertising profile settings due to automatic operation. Also in such a scenario, step 110 may, for example, comprise providing for automatic override of advertising profile settings due to explicit user input.

An advertising profile may, for example, comprise default advertising settings and/or mandatory advertising settings. For example, in the absence of preferred advertising content, default advertising may be provided. Also for example, a content provider may mandate that particular types of advertising be presented regardless of preferences specified by a user or automatically determined by the system. In such a scenario, for example, an advertiser may pay the content provider a premium to ensure that particular advertising content will always be provided (e.g., to a particular premises, to particular equipment, to a particular user, to a particular group of users, etc.) regardless of user-specified and/or automatically-specified profile settings. Also in such a scenario, for example, a content provider may have the ability to always push down particular charity solicitations, political advertisements, and other mandatory content to an audience.

Step 110 may comprise storing and/or maintaining an advertising profile at a variety of different locations. For example, step 110 may comprise storing advertising profile information locally at user equipment (e.g., a user's local media presentation system). Also for example, step 110 may comprise storing advertising profile information at user equipment that is not part of the media presentation system, but which is communicatively coupled thereto.

Additionally for example, step 110 may comprise storing advertising profile information at a site remote from a user's premises (e.g., at a central network server associated with a media communication company (e.g., a cable television provider, a satellite television provider, an Internet services provider, etc.) that provides media communication service to the user). For example, step 110 may comprise storing and/or maintaining the advertising profile information at a networked database maintained and/or controlled by a communication network provider. Also for example, step 110 may comprise storing and/or maintaining the advertising profile information at a networked database maintained and/or controlled by a media provider (e.g., at a television programming head-end, etc.). Additionally for example, step 110 may comprise storing and/or maintaining the advertising profile information at a networked database maintained and/or controlled by an advertising content provider (e.g., an advertising agency). Such a networked database may also, for example, be maintained and/or controlled by a product/service provider corresponding to a consumer good and/or service being provided.

Note that step 110 may comprise storing the advertising profile in a manner that allows access to such profile information when a user is away from the user's home (e.g., on business travel, on vacation, etc.). For example, as mentioned above, a user's advertising profile may be stored at a central networked database, but may also be stored on a user's personal electronic device (e.g., a smart phone, media presentation device, etc.). Also note that the advertising profile may be stored in a distributed manner, in which a portion is stored at a first location (e.g., at user equipment) and a portion is stored at a second location (e.g., at a networked database).

Further note that step 110 may comprise developing a plurality of profiles for a single user. For example, a first advertising profile may be associated with the user when the user is located at a home premises, and a second advertising profile may be associated with the user when the user is away from the home premises.

In general, step 110 may comprise developing an advertising profile for a user. Accordingly, the scope of various aspects of the present invention should not be limited by characteristics of any particular manner of developing such an advertising profile or by any characteristics of such an advertising profile unless explicitly claimed.

The exemplary method 100 may, for example at step 120, comprise identifying the user (or a plurality of users) utilizing a media presentation system. Step 120 may comprise performing such identifying in any of a variety of manners, non-limiting examples of which will now be presented.

Step 120 may, for example, comprise identifying the user (or a plurality of users) based on user login. For example, a user may log into a media presentation system. In such a scenario, step 120 may comprise identifying the logged in user (or set of users) as the user to which media (including advertising content) is being presented.

Also for example, step 120 may comprise identifying a user by determining the identity of a user operating a remote control. Such identifying may, for example, comprise identifying the user (or distinguishing between a finite set of known users) based, at least in part, on fingerprint recognition, voice recognition, hand size recognition, etc. Note that in an exemplary scenario in which a user is utilizing the user's personal device (e.g., a smart phone) as a media presentation controller, step 120 may comprise identifying the user by recognizing the user's personal device.

Additionally for example, step 120 may comprise identifying the presence of a user in a viewing and/or audio presentation area (or envelope or region) utilizing positioning system information (e.g., communicated by an electronic device, such as a communication device, associated with a user, where such device has positioning capability (e.g., GPS capability)). For example, video and/or audio presentation envelopes may be determined for media presentation, and a user's location in relation to such envelope(s) may be utilized to determine whether the user is presently consuming (e.g., viewing and/or hearing) media that is being presented by the media presentation system.

For example, a video presentation envelope may be defined based on location and/or pointing direction of a television screen, based on room boundaries, etc. For example, there may be a defined viewing envelope (or region) associated with video content presentation. Step 120 may comprise identifying one or more viewers of video content by, for example, comparing known user locations to such a viewing envelope.

Also for example, an audio presentation envelope may be defined based on location and/or pointing direction of one or more speakers, based on speaker volume settings, based on room boundaries and/or other sound barriers, etc. For example, there may be a defined hearing envelope (or region) associated with audio content presentation. Step 120 may comprise identifying one or more hearers of audio content by, for example, comparing known user locations to such an audio envelope.

Note that in an audio/video presentation scenario, both viewing and hearing envelopes may be determined, and step 120 may comprise analyzing known user location in relation to each of such envelopes. In such a scenario, the hearing and viewing envelopes may be significantly different. For example, a user in an adjoining room may be within a hearing envelope for multimedia presentation but not within a viewing envelope. Such a situation may, as will be discussed later, affect a type of advertising that is selected for presentation.

In addition to (or in lieu of) utilizing user positioning information (e.g., as obtained and/or communicated by a personal positioning system), step 120 may comprise identifying the presence of a user in a video and/or audio presentation envelope utilizing other techniques. For example, step 120 may comprise identifying the presence of a user by detecting and/or analyzing electrical signals associated with a user (*e.g.*, detecting the presence of a user's personal electronic device (e.g., cellular telephone, WiFi device, personal media player, wireless speaker/microphone, etc.) in a media presentation envelope.

Also for example, step 120 may comprise identifying the presence of a user by detecting and/or analyzing various physical characteristics of the user. Such physical characteristics may, for example, comprise body heat (e.g., utilizing an infrared detector), size, mass, weight, biorhythms, eye characteristics (e.g., utilizing retinal scanning or camera technology), facial characteristics (e.g., utilizing a camera and facial recognition technology), speech characteristics (e.g., utilizing an audio input and speech recognition technology) and/or other signatures associated with a user. Note that in a scenario in which a finite user group is defined, general physical characteristics, such as physical size, may suffice for distinguishing between users in the finite group.

Step 120 may comprise performing user identification at any of a variety of times and/or in response to any of a variety of causes and/or conditions. For example, step 120 may comprise performing user identification at a time associated with an advertising break in media being presented (e.g., at a time associated with a television commercial presentation time in a movie). In such a scenario, step 120 may identify a user to which upcoming advertising content should be targeted.

Also for example, user identification may be determined on a periodic basis (e.g., every N minutes, every hour, etc.). For example, in an exemplary scenario, when video media is being presented, step 120 may comprise identifying all users viewing and/or hearing such media every five minutes. Additionally, for example, step 120 may comprise identifying the user(s) when a media system component is powered up (or turned on) and/or is reset.

Further for example, step 120 may comprise identifying the user(s) in response to utilization of a user interface component of the media presentation system (e.g., manipulation of a remote control, a volume control, a channel control, electronic programming guide operation, etc.). In an exemplary scenario, step 120 may comprise identifying the user(s) whenever a media channel (e.g., a television channel or radio channel) is changed.

Still further for example, step 120 may comprise identifying the user(s) in response to a detected change in any one or more environmental characteristics being monitored. For example, step 120 may comprise identifying the user(s) in response to a change in electrical signals being detected within or near a media consumption envelope. Also for example, step 120 may comprise identifying the user(s) in response to a detected change in infrared signature (e.g., a change in total infrared magnitude, a change in number of infrared signatures, movement of an infrared source, etc.). Additionally, for example, step 120 may comprise identifying the user(s) in response to detected vibrations (e.g., footsteps). Further, for example, step 120 may comprise identifying the user(s) in response to detected motion in or near a media presentation envelope.

In various exemplary scenarios, step 120 might not detect the presence of a user in a media presentation envelope. In such a scenario, step 120 may, for example, comprise identifying a user by identifying a nearest user to the media presentation envelope. In such a scenario, the nearest user might be the most likely to enter an audio and/or video envelope in which advertising content is being presented.

In general, step 120 may comprise identifying the user (or a plurality of users) utilizing a media presentation system. Accordingly, the scope of various aspects of the present invention should not be limited by characteristics of any particular manner of performing such identifying and/or by characteristics of any particular cause or condition of such identifying unless explicitly claimed.

The exemplary method 100 may, for example at step 130, comprise selecting advertising for presentation (e.g., by the user's media presentation system) based, at least in part, on the advertising profile for the user (e.g., as developed at step 110) and the identification of the user (e.g., as identified at step 120). Non-limiting examples of such selecting will now be presented.

Step 130 may, for example, comprise selecting advertising for presentation based on the identification of a single user. For example, upon identification of a single user at step 120, step 130 may comprise analyzing the advertising profile for the single user to select advertising to present to the user.

In an exemplary scenario in which programming is being presented to a single user, an advertising profile associated with the single user may be analyzed to identify advertising to present to such user.

For example, in an exemplary scenario, the detection of a particular user within a media presentation envelope may trigger advertising directly associated with the particular user to be presented. In another exemplary scenario, the detection of a particular user within a viewing envelope may cause step 130 to select advertising directly associated with the particular user and with a high emphasis on viewing (e.g., where the visual aspects of such advertising content are key to such content or relatively more important than the audio aspects) to be presented to such user. In yet another exemplary scenario, the detection of a particular user within a hearing envelope (and, e.g., not within the viewing envelope) may cause step 130 to select advertising directly associated with the particular user and with a relatively low emphasis on viewing versus hearing (e.g., where the audio aspects of such advertising content are key to such content or relatively more important than the video aspects). In such a scenario (e.g., in which no user is detected in a viewing envelope), step 130 may select just the audio portion of an audio/video advertisement to present.

In another example, the detection of a particular user (e.g., the presence of a user having a profile that forbids particular advertisements) in a media presentation envelope may keep particular advertisements from being presented. For example, the presence of a child in a programming viewing and/or hearing area may cause step 130 to select family-friendly advertising content to be presented and block various mature-theme advertisements from being presented.

Providers of advertising content may also prioritize advertising content (*e.g.*, in addition to user-centric prioritization, such as might be found in a user advertising profile). For example, step 130 may comprise receiving advertisement prioritization information (e.g., in a priority-based ordered list) from one or more providers of such advertising content. For example, a television provider may assign priority levels in accordance with revenue associated with particular advertisers.

In such a scenario, step 130 may comprise identifying the highest priority advertising content (e.g., as prioritized by the content provider) that meets advertisement criteria specified in the user's advertising profile (e.g., at step 110). In such a manner, the user ultimately receives the advertising content desired by the user, advertisers reach the parties that are the most interested in their respective products, and advertising content providers provide their highest priority advertising content that particular users wish to receive. In one exemplary implementation, step 130 may comprise traversing an ordered list of advertising content (e.g., in order from highest priority to lowest priority) provided by a programming provider until an advertisement is identified that matches advertisement criteria specified by the user (e.g., as indicated in an advertising profile for the user).

In various exemplary scenarios, step 130 may comprise overriding user preference information in a user's advertising profile regarding advertising content to be presented (or not to be presented) to the user. For example, in a scenario in which an advertisement has a particularly high priority, step 130 may comprise presenting such advertisement to the user regardless of any user preference information in the user's advertising profile. In another exemplary scenario, for example a scenario in which user-defined advertisement criteria in the user's advertising profile are too restrictive to allow effective presentation of advertising content, step 130 may comprise overriding (at least occasionally) the overly restrictive user preferences.

As discussed above, step 130 may comprise selecting advertising content based on the identification of a single user and an advertising profile corresponding to such identified user. Step 130 may also, for example, comprise selecting advertising content based on the identification (or presence) of a plurality of users. Non-limiting examples of such operation will now be provided.

Step 130 may, for example, comprise selecting advertising content based on the advertising preferences (or restrictions) associated with a plurality of identified users (e.g., as included in a plurality of respective user advertising profiles). For example, step 130 may comprise analyzing respective advertising profiles associated with the plurality of detected users to determine commonality (or intersection) between advertising preferences associated with such users. In such a scenario, step 130 may comprise selecting advertising content that is of interest to (and allowed for) all identified users (e.g., as indicated in their respective user advertising profiles).

In another exemplary scenario, step 130 may comprise joining profiles (e.g., creating a union of respective advertising profiles associated with the plurality of detected users) to create a superset of advertisements to be presented to the users. In such a scenario, a selected advertisement will likely be desired by at least one of the identified users.

In yet another exemplary scenario, step 130 may comprise analyzing respective advertising profiles associated with a plurality of identified users and arbitrating between such profiles. For example, step 130 may comprise alternating (e.g., toggling or in round-robin fashion) selection of advertisements for presentation to the users.

Also for example, in another exemplary scenario step 130 may comprise prioritizing the respective advertising profiles between users. For example, a relatively high-priority advertising profile (e.g., corresponding to a head of the household, or owner of the television) may take priority if the presence of an associated user is detected. In such a scenario, step 130 may comprise selecting advertising content based only on the user advertising profile associated with the highest-priority user detected in a media presentation envelope.

In another exemplary scenario, the detection of a plurality of users in a media presentation area may trigger analysis of a premises-based advertisement profile. For example, rather than arbitrate between respective profiles associated with a plurality of users, step 130 may comprise defaulting (or falling back) to an advertising profile associated with a particular media presentation system or associated with a particular premises.

In a further exemplary scenario, for example in a scenario where no particular user is detected within the programming consumption envelope, step 130 may comprise selecting an advertising profile based on the identify of a user that is closest to the media presentation area (or most likely to be in the presentation area next, for example based on user movement information) and basing advertising content selection decisions on such selected advertising profile.

Also for example, if a user is detected, but no advertising profiles are presently associated with such a user, step 130 may comprise defaulting to an advertising profile associated with the media presentation system and/or premises.

In another exemplary scenario, for example in which no users are presently detected within a video and/or audio presentation envelope (or no users with corresponding advertising profiles), step 130 may comprise selecting advertising based on the identify of the most recently identified user having a corresponding advertising profile. For example, when a particular user is present, advertising content is selected for such user. Then when the user leaves the room and no other user is detected, advertising content may still be selected (e.g., by default) for such user (e.g., in anticipation of the user's return).

Various aspects of the present invention apply to selecting advertising for a user at any location (e.g., at a home location, at a work location, on travel, etc.). For example, a user may travel to a friend's house, to a hotel, to a public venue, etc. In such a scenario, step 120 may comprise detecting the user's presence at such location, and step 130 may then select advertising to be presented at such location based on the user advertising profile associated with the user. For example, a user may view programming at a hotel. The detection of such user viewing programming on a television in a hotel room may trigger advertisements to be presented on such television based on a networked advertising profile associated with such user. Note that in such a scenario, the user's advertising profile(s) may be stored at a central networked database or may also, for example, be stored in a portable electronic device carried by the user (e.g., stored in the user's smart phone). As mentioned previously, a user may have a plurality of user advertising profiles, where each of such plurality of user advertising profiles may correspond to a location (e.g., a home profile, a non-home profile, etc.). In a scenario in which a user has multiple advertising profiles, step 130 may comprise selecting the appropriate advertising profile (e.g., based on detected user location, based on exclusive user input, etc.).

As discussed above, a video presentation envelope and an audio presentation envelope may be associated with presented media. Particular advertising content (e.g., advertising content with relatively high quality visual characteristics, or based in large part on visual humor or physical attractiveness) may be identified (e.g., by a provider of such content) with a relatively high preference for the user to be present in a viewing area (or envelope) associated with a media presentation system. In such a scenario, step 130 may comprise refraining from selecting such particular advertisement and selecting a more audio-centric advertisement when the user is determined to be within the audio presentation envelope but not within the video presentation envelope of the media presentation system.

Alternatively, particular advertising content might be largely based on audio characteristics (e.g., based on music, verbal humor, etc.). Such advertising content may be identified as having a relatively low preference for the user to be present in a viewing area, but a relatively high preference for the user to be present in the audio presentation envelope associated with a media presentation system. In such a scenario, step 130 may comprise selecting such particular advertisement when the user has moved outside the video presentation envelope but remains within the audio presentation envelope.

Note that advertising selection at step 130 may also affect advertising compensation (i.e., monetary compensation provided to a content provider may be based on whether the user is in particular media presentation envelopes). For example, a content provider may cause an advertisement to be presented to a user when such user is in the audio presentation envelope but not within the video presentation envelope. In such a scenario, the content provider may discount the cost of such advertisement to the advertiser based on limited user exposure to the visual aspects of such advertisement.

In general, step 130 may comprise selecting advertising for presentation (e.g., by the media presentation system) based, at least in part, on the advertising profile for the user (e.g., as developed at step 110) and the identification of the user (e.g., as identified at step 120). Accordingly, the scope of various aspects of the present invention should not be limited by characteristics of any particular manner of performing such selecting unless explicitly claimed.

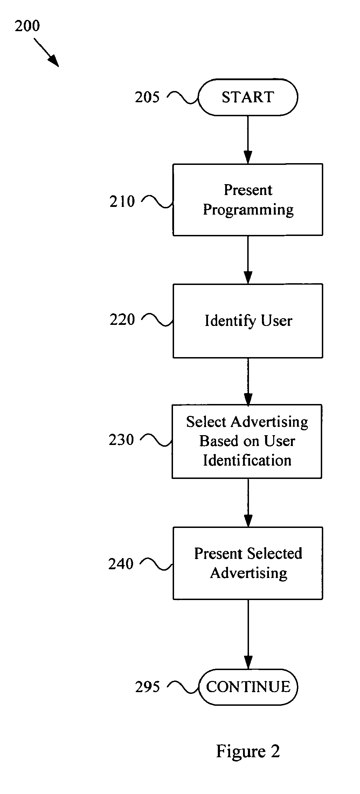

The exemplary method 100 may, for example at step 195, comprise continuing operation. Such continued operation may comprise any of a variety of characteristics, non-limiting examples of which will now be presented. For example, step 195 may comprise returning execution flow of the exemplary method 100 to any of the previous steps (e.g., for additional development of one or more user advertising profiles, for identification of one or more users, for additional advertising content selection, etc.). Also for example, step 195 may comprise performing any other operations discussed herein (e.g., with regard to any of the steps of the exemplary method 200 illustrated in Figure 2 and discussed below). For example, as will be discussed in more detail later in the discussion of the method 200 shown in Figure 2, step 195 may comprise acquiring and/or presenting the advertising content selected at step 130.

In general, the method 100 is a non-limiting exemplary method for providing user identification-based advertising content selection. Accordingly, the scope of various aspects of the present invention should not be limited by characteristics of any particular manner of performing such user identification-based advertising content selection unless explicitly claimed.

Turning next to Figure 2, such figure shows a non-limiting exemplary flow diagram of a method 200 for providing user identification-based advertising content presentation, in accordance with various aspects of the present invention. The exemplary method 200 may, for example, share any or all characteristics with the exemplary method 100 illustrated in Figure 1 and discussed previously. Any or all aspects of the exemplary method 200 may, for example, be implemented in user equipment (*e.g.*, a personal video recorder, a television receiver (or set top box) with or without video recording capability, a gaming device, a personal computing device (e.g., handheld, notebook, laptop, desktop, etc.), etc. Also, any or all aspects of the exemplary method 200 may be performed by non-user equipment (e.g., network video content server apparatus, communication network infrastructure apparatus, etc.).

The exemplary method 200 may begin executing at step 205. Step 205 may share any or all characteristics with step 105 of the exemplary method 100 illustrated in Figure 1 and discussed previously. Also for example, step 205 (or, for example, step 240) may begin executing at step 195 (or any other step) of the exemplary method 100 illustrated in Figure 1.

The exemplary method 200 may, for example at step 210, comprise presenting media (e.g., television programming, audio programming, etc.) to a user. The manner in which such media presentation is performed generally depends on the type of media being presented. For example, step 210 may comprise outputting a television program on a television screen and associated speakers. Also for example, step 210 may comprise outputting a radio program on a mono speaker, speakers of a stereo system, speakers of a premises wide audio system, speakers of a surround sound system, etc. Such presentation may, for example, comprise presenting an audio/video presentation on a computer screen (e.g., a screen of a handheld computer, a notepad computer, a notebook computer, a laptop computer, a desktop computer, etc.).

In an exemplary scenario, step 210 may comprise presenting media content that includes general advertising content that is broadcast to a general audience. In other words, step 210 may comprise presenting programming and/or advertising content with no regard to the identification of one or more users to which such content is being presented.

The exemplary method 200 may, for example at step 220, comprise identifying a user (e.g., of a media presentation system). Step 220 may, for example, share any or all characteristics with step 120 of the exemplary method 100 illustrated in Figure 1 and discussed previously.

The exemplary method 200 may, for example at step 230, comprise selecting advertising for presentation based, at least in part, on the identification of the user (e.g., as identified at step 220). Step 230 may, for example, share any or all characteristics with step 130 of the exemplary method 100 illustrated in Figure 1 and discussed previously. For example and without limitation, step 230 may comprise selecting advertising content based on one or more user-specific (or user group specific) advertising profiles associated with respective user(s) identified at step 220).

The exemplary method 200 may, for example at step 240, comprise presenting selected advertising content to a user (*e.g.,* to the user(s) identified at step 220). Step 240 may comprise performing such advertising content presenting in any of a variety of manners, non-limiting examples of which will now be presented.

Step 240 may, for example, comprise acquiring the advertising content selected at step 230 for presentation. Such acquiring may be performed in any of a variety of manners. For example, in an exemplary scenario, advertising content may be stored locally (e.g., on a PVR of the media presentation system, on a recorder of other user equipment, etc.). In such a scenario, step 240 may comprise retrieving such stored advertising content from the local memory.

In another exemplary scenario, step 240 may comprise acquiring selected advertising content from a network provider of programming (e.g., the programming currently being presented to the user at step 210). Such acquisition of advertising may, for example, be based on a pull system in which step 240 comprises requesting the selected advertising content from the network provider (or other networked entity capable of sourcing the selected advertising content).

Such acquisition of advertising may also, for example, be based on a push system. For example, in a scenario in which step 230 (or at least a portion thereof) is performed outside of the user's media presentation system (e.g., by a networked programming provider), step 240 may comprise receiving the advertising content that has been identified by the programming provider for presentation to the user(s) identified at step 220. Alternatively for example, step 240 may comprise receiving all advertising content broadcast by a content provider, and storing the broadcast advertising content that was selected at step 230.

In another exemplary scenario, identified advertising content may be obtained directly from an advertising agency. For example, a user's media presentation system (or other user equipment implementing the method 200) may (e.g., at step 230) have selected particular advertising content that is available from an advertising agency. In such scenario, step 240 may comprise communicating directly with the advertising agency (or a networked content server thereof) associated with such advertising content to request that the selected advertising content be communicated to the user's media presentation system.

In another exemplary scenario, identified advertising content may be obtained directly from a provider of a good and/or service being advertised. For example, a user's media presentation system (or other user equipment implementing the method 200) may (e.g., at step 230) have selected particular advertising content that is available directly from a provider of a product and/or service being advertised. In such scenario, step 240 may comprise communicating directly with such good and/or service provider (or a networked content server thereof) to request that the selected advertising content be communicated to the user's media presentation system.

Step 240 may comprise acquiring selected advertising content in real-time (e.g., when needed) or acquiring selected advertising content in advance of a need arising for presentation of such selected advertising content. For example, identified advertising associated with a particular user may be obtained (e.g., retrieved from or located in memory, requested from a content source, etc.) when the particular user is identified as being present in or near a media presentation envelope. For example, upon detection of a user who has expressed an interest in truck commercials, one or more current truck commercials may be downloaded to the media presentation system in preparation for the need for such commercials to be presented.

After the selected advertising content has been acquired and a determination is made to present such advertising content, step 240 may comprise presenting the selected advertising content to the user. Step 240 may, for example, comprise inserting the acquired advertising content in a media program that is currently being presented (e.g., at step 210). For example, step 240 may comprise identifying a point in programming being presented at which advertising content is to begin. Such identification may, for example, comprise identifying flags and/or data markers in a programming data stream. Such identification may also, for example, comprise processing file metadata, file header, and/or stream header (or control) information to determine points at which advertising is to be presented.

In a first exemplary scenario in which the programming does not include the advertising, step 240 may comprise inserting the selected advertising content at the identified point in the programming. In a second exemplary scenario in which the programming already includes embedded advertising, but not the selected advertising, step 240 may comprise replacing the embedded advertising with the selected advertising content at the identified point in the programming. Note that such advertising insertion and/or replacement (depending on where various steps of the exemplary method 200 are performed) may occur at a networked programming source and/or at user equipment (e.g., at the user's media presentation system).

Depending on programming timing constraints and advertising length, step 240 may comprise time-shifting a program being presented to maintain presentation continuity (e.g., slightly delaying presentation of programming following replacement advertising content when such content is longer than the replaced advertising content). Additionally, in an exemplary scenario in which currently received advertising content is replaced by other advertising content selected at step 230, the advertising content that was not presented may be retained (e.g., stored by the media presentation system) for later presentation.

Step 240 may comprise presenting selected advertising content on a screen of user equipment (e.g., a user's media presentation system) implementing the method 200. Also for example, step 240 may comprise outputting a video display driver signal and/or video data from such user equipment that causes (or results in) selected advertising content to be displayed on a video display external to user equipment implementing the method 200 (*e.g*., outputting such signal(s) to an external television, to a television or media system controller with an on-board display, to a personal computing device or system, etc.).

In general, step 240 may comprise presenting selected advertising content (e.g., as selected at step 230) to a user (e.g., to the user(s) identified at step 220). Accordingly, the scope of various aspects of the present invention should not be limited by characteristics of any particular manner of acquiring and/or presenting advertising content unless explicitly claimed.

The exemplary method 200 may, at step 295, comprise continuing operation. Such continued operation may comprise any of a variety of characteristics, non-limiting examples of which will now be presented. For example, step 295 may comprise returning execution flow of the exemplary method 200 to any of the previous steps (e.g., for additional programming presentation, for additional user identifying, for additional advertising content selection, for additional advertising content presentation, etc.). Also for example, step 295 may comprise performing any other operations discussed herein (e.g., with regard to any of the steps of the exemplary method 100 illustrated in Figure 1 and discussed previously).

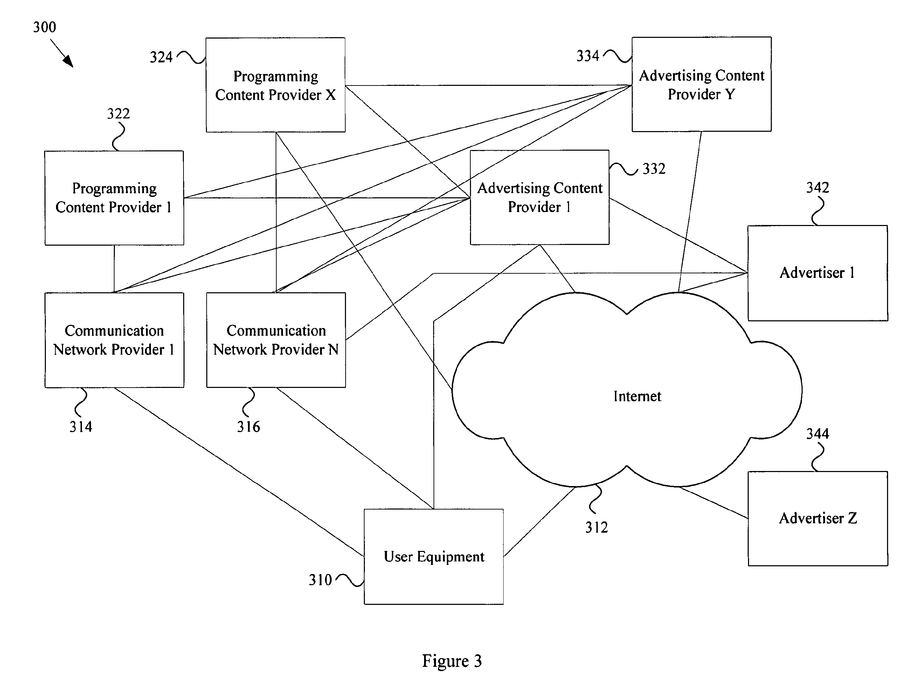

The previous discussions of Figures 1 and 2 included discussion of user equipment (e.g., a user's media presentation system) performing various aspects of the present invention. The previous discussion also mentioned that various aspects of the present invention may also be implemented in networked content source and/or communication network infrastructure apparatus. Such previous discussion also included general discussion of video content (e.g., programming and/or advertising content) sources. Figure 3 is provided herein to show a non-limiting example of a media content system including user equipment (e.g., a user's media presentation system), content providers, and communication networks communicatively coupling such entities. Such illustrative video content system is merely illustrative and non-limiting.

Figure 3 is a diagram illustrating a media content (e.g., programming and/or advertising media content) distribution environment 300. The exemplary environment 300 comprises user equipment 310 (e.g., an end-user electronic device or system with media content playing capability).

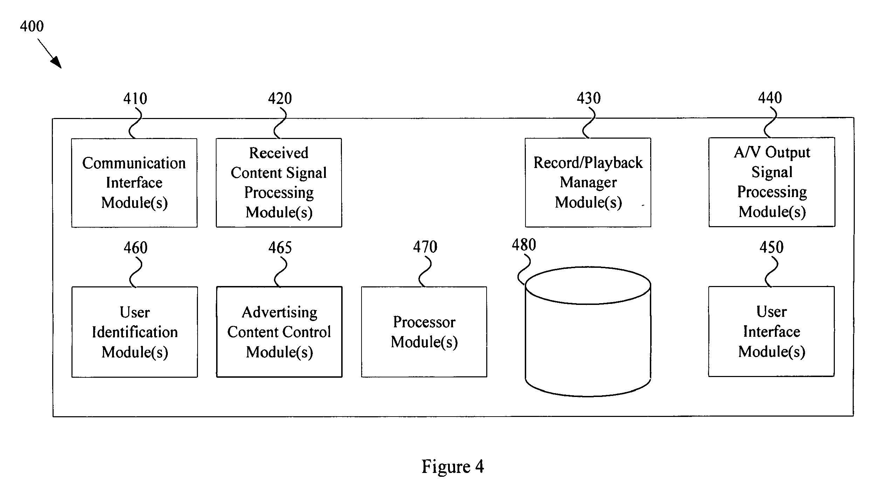

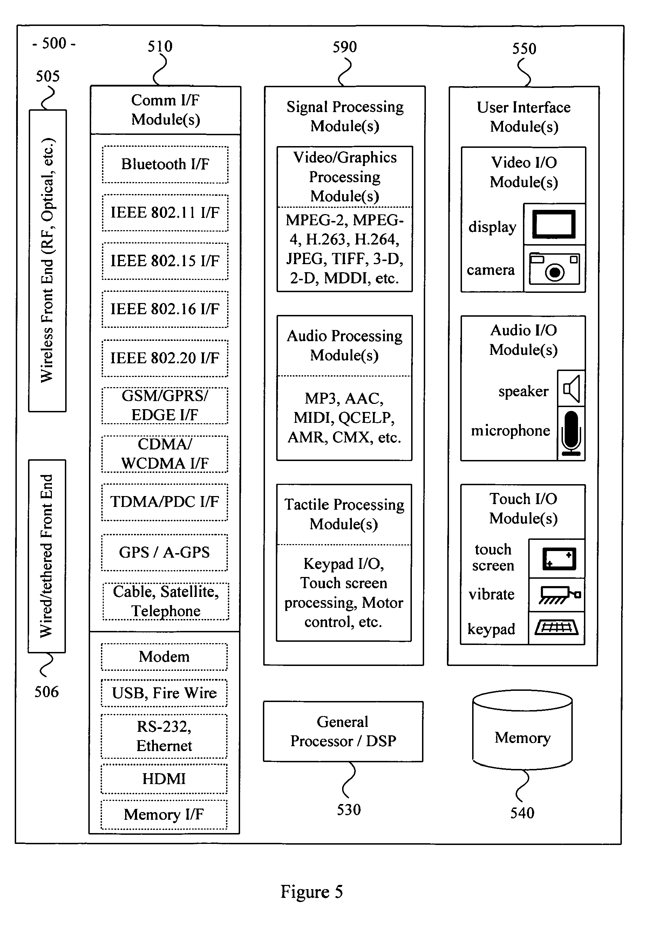

Such user equipment 310 may share any or all characteristics with the user equipment (e.g., a user's media presentation system) discussed elsewhere herein, including without limitation the user equipment 400 illustrated in Figure 4 and the user equipment 500 illustrated in Figure 5. The user equipment 310 may, for example, perform any or all of the functionality discussed previously with regard to the methods 100 and 200 illustrated in Figures 1-2 and discussed previously.

The exemplary environment 300 also comprises a plurality of communication networks (or communication network providers). For example, the user equipment 310 is communicatively coupled to a first communication network provider 314 and an N^{th} communication network provider 316. Such communication network providers (314 and 316) may operate to communicatively couple the user equipment 310 to any of a variety of different types of communication networks. For example, such communication network providers (314 and 316) may operate to provide the user equipment 310 access to cable and/or satellite television networks, wired and/or wireless telecommunication networks, wired and/or wireless data networks, wireless networks of various ranges (e.g., PANs, LANs, WANs, MANs, etc.), etc.

The exemplary environment 300 also comprises the Internet 312 (or Internet Service Provider). For example, the user equipment 310 may be communicatively coupled directly to the Internet 312 or via an Internet Service Provider. Note that the user equipment 310 may also, for example, be communicatively coupled to the Internet 312 via the first communication network provider 314 and/or N^{th} communication network provider 316.

The exemplary environment 300 also comprises a plurality of programming content providers (*e.g*., 1 to X programming providers). For example, the illustrated environment 300 shows a first programming content provider 322 and an X^{th} programming content provider 324. Such programming content providers (322 and 324) may operate to provide programming content (or any video content) to the user equipment 310 via any of the communication networks (or providers) discussed above. A programming provider may, for example, include a television programming provider, a computer network programming provider, a television network or portion thereof (e.g., Fox, NBC, CBS, ABC, ESPN, NFL, HGTV, etc.), etc.

In an exemplary scenario, the first programming content provider 314 may operate to communicate a first television program to the user equipment 310 via the first communication network provider 314. Such a first television program may, for example, comprise embedded first advertising video content that the first programming content provider 314 received from the first advertising content provider 332 and embedded into the first program.

In another exemplary scenario, the X^{th} programming content provider 314 may operate to communicate a second television program to the user equipment 310 via the N^{th} communication network provider 316 and/or via the Internet 312. Such second television program may, for example, alternatively contain no advertising content or contain advertising content received from any or all of the advertising content providers (332 or 334) or advertisers (342 or 344) in the environment 300 or external to the illustrated environment 300.

As mentioned previously, the user equipment 310 may interact with video content providers (e.g., programming content providers, advertising content providers, advertisers, communication service providers, etc.) to, at least in part, determine whether particular advertising content is available, to acquire advertising content, etc. In such an exemplary scenario, the user equipment 310 operates to communicate with any or all of the communication network providers (314 and 316), the programming content providers (322 and 324), the advertising content providers (332 and 334), and the advertisers (342 and 344).

As mentioned above, advertising video content may be embedded in programming video content. Also for example, as illustrated by various communication pathways in the environment 300, the user equipment 310 may operate to receive advertising content directly from the advertising content providers or advertisers (e.g., advertising enterprises).

As referred to above, the exemplary environment 300 also, for example, comprises a plurality of advertising content providers (e.g., 1 to Y advertising content providers). For example, the illustrated environment 300 shows a first advertising content provider 332 and a Y^{th} programming content provider 334. Such advertising content providers (332 and 334) may operate to provide advertising video content to the user equipment 310 via any of the communication networks (or providers) discussed above. Also for example, such advertising providers (332 and 334) may operate to provide advertising video content to the programming content providers (322 and 324) for ultimate communication to the user equipment 310 (e.g., embedded in a television program, communicated in a data stream independent of data streams communicating television programming, etc.).

Also, as mentioned above, the exemplary environment 300 also comprises a plurality of advertisers (e.g., 1 to Z advertisers). For example, the illustrated environment 300 shows a first advertiser 342 (e.g., a first commercial enterprise advertising a product or service provided by such first commercial enterprise) and a Z^{th} advertiser 344 (e.g., a Z^{th} commercial enterprise advertising a product or service provided by such Z^{th} commercial enterprise). As illustrated in Figure 3, such advertisers (342 and 344) may operate to communicate advertising content (or related information) to enterprises that specialize in generating video advertising content (e.g., advertising content providers 332 and 334), communicate advertising content (or related information) to programming content providers (e.g., the programming content providers 322 and 324), communicate advertising content (or related information) to communication network providers (or networks) (e.g., the communication network providers 314 and 316, the Internet 312 (or ISP), etc.), and/or communicate advertising content (or related information) directly to the user equipment 310).

In general, the exemplary environment 300 provides a non-limiting illustration of various entities that might or might not be present in any particular video content distribution system. Accordingly, the scope of various aspects of the present invention should not be limited by characteristics of the exemplary environment 300 unless explicitly claimed.

Figure 4 is a diagram illustrating various non-limiting aspects of exemplary user equipment 400. The user equipment may comprise characteristics of any of a variety of types of user equipment. For example and without limitation, the user equipment 400 may be or comprise an electronic device with video processing capability. For example, the user equipment 400 may comprise a personal video recorder, a television receiver (or set top box, for example cable and/or satellite), a gaming device, a television, a personal computing device (e.g., handheld, notebook, laptop, desktop, etc.), a distributed home network comprising communicatively coupled devices that operate to play video content, a general user media presentation system, etc. Such user equipment 400 may, for example, be integrated into a single housing or a plurality of housings of a personal audio/video entertainment system. Such user equipment may also, for example, comprise video recording capability (*e.g*., advertising content recording capability) for time-shifting video content. In a configuration comprising a plurality of housings, such user equipment may be co-located or positioned at geographically distinct locations.

The user equipment 400 may, for example, share any or all characteristics with the user equipment 310 of the environment 300 illustrated in Figure 3 and discussed previously. Also for example, the user equipment 400 (e.g., one or more modules thereof) may, for example, operate to perform any or all functionality discussed previously with regard to the methods 100 and 200 illustrated in Figures 1-2 and discussed previously.

The user equipment 400 may, for example, comprise one or more communication interface modules 410 that operate to perform any or all of the communication interface functionality discussed herein. The communication interface module(s) 410 may, for example, operate to communicate over any of a variety of communication media and utilizing any of a variety of communication protocols (e.g., including operating in accordance with various respective protocol layers, for example, PHY, MAC, network, transport, etc.). For example, the communication interface module 410 may be operable to communicate via one or more wired and/or wireless communication ports. The communication interface module(s) 410 may, for example, operate to communicate with one or more communication networks (e.g., cable television networks, satellite television networks, telecommunication networks, the Internet, local area networks, personal area networks, metropolitan area networks, etc.) via which video content (e.g., television program content, advertising video content, etc.) and/or other data (*e.g*., information regarding advertising video content desired or not desired by a user, user information, account information, general data, etc.) is communicated. Also for example, the communication interface module(s) 410 may operate to communicate with local sources of video content (e.g., video recorders, receivers, gaming devices, etc.) that may, for example, be external to but communicatively coupled to the user equipment 400. Additionally, for example, the communication interface module(s) 410 may operate to communicate with a controller for the user equipment (e.g., directly or via one or more intermediate communication networks).

The exemplary user equipment 400 may also comprise additional communication interface modules, which are not illustrated. Such additional communication interface modules may, for example, share any or all aspects with the communication interface module(s) 410 discussed above.

The exemplary user equipment 400 may comprise one or more signal processing modules 420. Such signal processing module(s) 420 may, for example, operate to process received video and/or data content (e.g., programming and/or advertising content, user interface content received via a communication network etc.). Such signal processing modules may, for example and without limitation, comprise video decoding modules, transcoding modules that convert coded content from one code to another, audio processing modules, etc.

The exemplary user equipment 400 may comprise one or more video record/playback manager modules 430. Such module(s) 430 may operate to manage the recording and playback of video content (e.g., program content, advertising content, etc.). Such module(s) 430 may operate to perform any or all of the video recording and/or playback functionality discussed herein.

Such module(s) 430 may, for example, operate to utilize the user interface module(s) 450 to interact with a user regarding desired recording and playback operation. Such module(s) may, for example, operate to interact with the memory 480 (or with an external memory) for recording video content and/or reading recorded video content. Such module(s) 430 may, for example, operate to interact with the advertising content control module(s) 465 which selects advertising content to be presented with program content. Such module(s) 430 may also, for example, operate to utilize the A/V output signal processing module(s) 440 to process output video content for ultimate presentation to a user.

As mentioned above, the exemplary user equipment 400 may also comprise one or more audio/video output signal processing modules 440. Such AN output processing module(s) 440 may, for example, operate to process audio and/or video information for output to a display and/or speaker device. For example, such AN output processing module(s) 440 may operate to receive stored video content (e.g., stored programming and/or advertising content) information from the memory 480 and process such information (e.g., performing decoding, performing decompressing, converting video data into video display driver signals, etc.) for output to a user. For example, the A/V output processing module(s) 440 may operate to output audio speaker and/or video display driver signals. Also for example, the AN output processing module(s) 440 may operate to output processed audio and/or video data for further downstream processing (e.g., for ultimate presentation to a user in human-perceivable form).

The exemplary user equipment 400 may also comprise one or more user interface modules 450. The user interface module(s) 450 may generally operate to provide user interface functionality to a user of the user equipment 400. The user interface module(s) 450 may, for example, operate to perform any or all of the user interface functionality discussed herein.

For example, and without limitation, the user interface module(s) 450 may operate to provide for user control of any or all standard user equipment commands (e.g., video recording and/or playback control, for example, record commands, playback commands scheduled recording commands, channel control, on/off control, video input and/or output selection, programming interaction, interacting with the user regarding the presentation of advertising video content before, during and/or after the presentation of the recorded program video content, etc.).

The user interface module(s) 450 may, for example, operate to respond to user commands utilizing user interface features disposed on the user equipment 400 (e.g., buttons, etc.) and may also utilize the communication module(s) 410 to communicate with a controller (e.g., a dedicated user equipment remote control, a universal remote control, a cellular telephone, personal computing device, gaming controller, etc.). Further for example, the user interface module(s) 450 may utilize the communication module(s) 410 to communicate with another device external to the user equipment 400 to utilize the user interface features of such external device.

The exemplary user equipment 400 may comprise one or more processors 470. The processor(s) 470 may, for example, comprise a general purpose processor, digital signal processor, application-specific processor, microcontroller, microprocessor, etc. For example, the processor(s) 470 may operate in accordance with software (or firmware) instructions. As mentioned previously, in addition to or in lieu of any or all functionality discussed herein being performed by discrete hardware (e.g., in distinct separate integrated circuits or combined into a single integrated circuit), any or all functionality discussed herein may be performed by a processor executing instructions. For example, though various modules are illustrated as separate blocks or modules in Figure 4, such illustrative modules, or any portion thereof, may be implemented by the processor(s) 470.

The exemplary user equipment 400 may comprise one or more memories 480. As discussed above, any or all functional aspects discussed herein may be performed by one or more processors executing instructions. Such instructions may, for example, be stored in the one or more memories 480. Such memory 480 may, for example, comprise characteristics of any of a variety of types of memory. For example and without limitation, such memory 480 may comprise one or more memory chips (*e.g*., ROM, RAM, EPROM, EEPROM, flash memory, one-time-programmable OTP memory, etc.), hard drive memory, CD memory, DVD memory, etc.

Additionally, as discussed previously, the record/playback manager module(s) 430 may interact with the memory 480 to store video content in the memory 480 and/or retrieve stored video content from the memory 480. In such a scenario, the memory 480 may comprise separate memories or may be partitioned to accommodate stored video content and processor instructions, along with user data and any other type of data (e.g., advertising content profile information, user profile information, user account information, scratch pad data, etc.).

The exemplary user equipment 400 may also comprise one or more user identification modules 460. Such user identification module(s) 460 may, for example, operate to perform any or all of the user identification functionality discussed herein. For example and without limitation, the user identification module(s) 460 may operate to perform any or all functionality discussed previously with regard to step 120 of the exemplary method 100 illustrated in Figure 1 and/or any or all functionality with regard to step 220 of the exemplary method 200 illustrated in Figure 2 and discussed previously.

For example, the user identification module(s) 460 may operate to identify the user (or a plurality of users) utilizing the user equipment 400 (e.g., a media presentation system). The user identification module(s) 460 may operate to perform such identifying in any of a variety of manners, non-limiting examples of which will now be presented.

The user identification module(s) 460 may, for example, operate to determine the user (or a plurality of users) based on user login. For example, a user may log into the user equipment 400 (e.g., utilizing the user interface module(s) 450). In such a scenario, the user identification module(s) 460 may operate to identify the logged in user(s) as the user(s) to which media (including advertising content) is being presented.

Also for example, the user identification module(s) 460 may operate to identify a user by operating to determine the identity of a user operating a remote control. Such identifying may, for example, comprise identifying the user (or distinguishing between a finite set of known users) based, at least in part, on fingerprint recognition, voice recognition, hand size recognition, etc. For example and without limitation, the user identification module(s) 460 may operate to communicate with such remote control (or sensors thereon) via the communication interface module(s) 410 and/or the user interface module(s) 450.

Additionally for example, the user identification module(s) 460 may operate to identify the presence of a user in a viewing and/or audio presentation envelope (or area or region) utilizing positioning system information (e.g., communicated by a personal electronic device, such as a communication device, associated with a user). Such positioning information may, for example, be received via the communication interface module(s) 410. For example, video and/or audio presentation envelopes may be determined for media presentation, and a user's location in relation to such envelope(s) may be utilized to determine whether the user is presently consuming (e.g., viewing and/or hearing) media that is being presented by the media presentation system.

For example, a video presentation envelope may be defined based on location and/or pointing direction of a television screen, based on room boundaries, etc. For example, there may be a defined viewing envelope (or region) associated with video content presentation. In such an exemplary scenario, the user identification module(s) 460 may operate to identify one or more viewers of video content by, for example, comparing known user locations to such a viewing envelope.

Also for example, an audio presentation envelope may be defined based on location and/or pointing direction of one or more speakers, based on speaker volume settings, based on room boundaries and/or other sound barriers, etc. For example, there may be a defined hearing envelope (or region) associated with audio content presentation. In such an exemplary scenario, the user identification module(s) 460 may operate to identify one or more hearers of audio content by, for example, comparing known user locations to such an audio envelope.

Note that in an audio/video presentation scenario, viewing and hearing envelopes may be determined, and the user identification module(s) 460 may operate to analyze known (e.g., detected) user location in relation to each of such envelopes. In such a scenario, the hearing and viewing envelopes may be significantly different. For example, a user in an adjoining room may be within a hearing envelope for multimedia presentation but not within a viewing envelope. Such a situation may, as will be discussed later, affect a type of advertising that is selected for presentation.

In addition to (or in lieu of) utilizing user positioning information (e.g., as obtained and/or communicated by a personal positioning system), the user identification module(s) 460 may operate to identify the presence of a user in a video and/or audio presentation envelope utilizing other techniques. For example, the user identification module(s) 460 may operate to identify the presence of a user by, at least in part, detecting and/or analyzing electrical signals associated with a user (*e.g.*, detecting the presence of a user's personal electronic device (e.g., cellular telephone, WiFi device, personal media player, wireless speaker/microphone, etc.) in a media presentation envelope.

Also for example, the user identification module(s) 460 may operate to identify the presence of a user by, at least in part, operating to detect and/or analyze various physical characteristics of the user. Such physical characteristics may, for example, comprise body heat (e.g., utilizing an infrared detector), size, mass, weight, biorhythms, eye characteristics (e.g., utilizing retinal scanning or camera technology), facial characteristics (e.g., utilizing a camera and facial recognition technology), speech characteristics (e.g., utilizing an audio input and speech recognition technology) and/or other signatures associated with a user. The user identification module(s) 460 may, for example, obtain such sensor information via, for example, the user interface module(s) 450 and/or via the communication interface module(s) 410. Note that in a scenario in which a finite user group is defined, general physical characteristics, such as physical size, may suffice for distinguishing between users in the finite group.

The user identification module(s) 460 may operate to perform user identification at any of a variety of times and/or in response to any of a variety of causes and/or conditions. For example, the user identification module(s) 460 may operate to perform user identification at a time associated with an advertising break in media being presented (e.g., at a time associated with a television commercial presentation time in a movie). In such a scenario, the user identification module(s) 460 may operate to identify a user to which upcoming advertising content should be targeted.

Also for example, user identification may be determined on a periodic basis (e.g., every N minutes, every hour, etc.). For example, in an exemplary scenario, when video media is being presented, the user identification module(s) 460 may operate to identify all users viewing such media every five minutes. Additionally, for example, the user identification module(s) 460 may operate to identify the user(s) when a media system component is powered up (or turned on) and/or is reset.

Further for example, the user identification module(s) 460 may operate to identify the user(s) in response to utilization of a user interface component of the user equipment 400 (e.g., manipulation of a remote control, a volume control, a channel control, electronic programming guide operation, etc.). In an exemplary scenario, the user identification module(s) 460 may operate to identify the user(s) whenever a media channel (e.g., a television channel or radio channel) is changed.

Still further for example, the user identification module(s) 460 may operate to identify the user(s) in response to a detected change in any one or more environmental characteristics being monitored. For example, the user identification module(s) 460 may operate to identify the user(s) in response to a change in electrical signals being detected (e.g., detected via the communication interface module(s) 410) within or near a media consumption envelope. Also for example, the user identification module(s) 460 may operate to identify the user(s) in response to a detected change in infrared signature (e.g., a change in total infrared magnitude, a change in number of infrared signatures, movement of an infrared source, etc.). For example, an infrared sensor may be integrated with the user equipment 400 or may be communicatively coupled to the user equipment 400 via the communication interface module(s) 410. Additionally, for example, the user identification module(s) 460 may operate to identify the user(s) in response to detected vibrations (e.g., footsteps). Further for example, the user identification module(s) 460 may operate to identify the user(s) in response to detection motion in or near a media presentation envelope.

In various exemplary scenarios, the user identification module(s) 460 might not detect the presence of a user in a media presentation envelope. In such a scenario, the user identification module(s) 460 may, for example, operate to identify a user by identifying a nearest user to the media presentation envelope. In such a scenario, the nearest user might be the most likely to enter an audio and/or video envelope in which advertising content is being presented.

In general, the user identification module(s) 460 may operate to identify the user (or a plurality of users) utilizing a media presentation system. Accordingly, the scope of various aspects of the present invention should not be limited by characteristics of any particular manner of performing such identifying and/or by characteristics of any particular cause or condition resulting in performance of such identifying unless explicitly claimed.

The exemplary user equipment 400 may also comprise one or more advertising content control modules 465. Such advertising content control module(s) 465 may, for example, operate to perform any or all of the advertising content control functionality discussed herein.

For example and without limitation, the advertising content control module(s) 465 may operate to perform any or all functionality with regard to developing user advertising profiles, for example as discussed with regard to step 110 of the exemplary method 100 illustrated in Figure 1 and discussed previously.

For example, the advertising content control module(s) 465 may operate to develop an advertising profile by, at least in part, operating to explicitly interact with a user (e.g., the subject of the advertising profile) with regard to defining such advertising profile. Such user interaction may, for example, be performed via the user interface module(s) 450 and/or the communication interface module(s) 410. For example, the advertising content control module(s) 465 may utilize the user interface module(s) 450 to provide a user interface by which a user may input characteristics of advertising content desired (or allowed) and/or undesired (or not allowed) by the user, where such information may then be incorporated into the user's advertising profile. Many non-limiting examples of various advertising content characteristics that may be specified by a user were discussed previously (e.g., in the discussion of step 110 of the method 100 illustrated in Figure 1). For example, such characteristics may include type of product, specific product, particular provider (or source) of an advertised product, general style (or type) of advertising content, specific advertisement, time window associated with particular advertising content, priority associated with advertising content, etc.

Note that the exemplary input characteristics discussed above may be input by the user separately, but may also be input by the user in any combination thereof. For example, the advertising content control module(s) 465 may operate to provide a user with a user interface by which the user may aggregate any one or more of the above-mentioned characteristics (e.g., for incorporation into the user's advertising profile).

For example, in a non-limiting exemplary scenario, the user may specify that, during a first time window, only family-friendly advertisements concerning toys and healthy foods are to be presented. Such scenario may also comprise the user specifying that during a late-night time window, only humorous advertisements, adult-oriented advertisements and other particular identified advertisements are to be presented. Such scenario may further comprise the user specifying that at all other times, advertisements for automobiles and home appliances are preferred over advertisements for health care products, but that health care products are still allowable. Such user-input advertising information may then, for example, be included in the user's advertising profile.

The advertising content control module(s) 465 may also, for example, operate to develop the advertising profile automatically (*i.e*., without explicit user interaction regarding the contents of such profile). For example, the advertising content control module(s) 465 may operate to monitor programming and/or advertising consumption by the user (or group of identified users, etc.). Such monitoring may, for example, be performed via communication with the recording/playback manager module(s) 430 and/or the A/V output signal processing module(s) 440. Such monitoring may, for example, comprise identifying advertising content that is presented to the user for which the user does not leave a presentation envelope (e.g., as may be determined by sensors communicatively coupled to the module(s) 465), identifying advertising content through which the user does not fast-forward (e.g., as may be detected via the record/playback manager module(s) 430), identifying advertising content during which the user does not change channels (e.g., as may be detected via the user interface module(s) 450), etc.

The advertising content control module(s) 465 may also, for example, operate to develop the advertising profile utilizing a combination of direct user interaction (e.g., as discussed above) and automatic techniques (e.g., as discussed above). For example, the advertising content control module(s) 465 may operate to interface with the user to identify desired and/or undesired advertising characteristics, and the advertising content control module(s) 465 may also monitor user media consumption activities to obtain additional information about the user's media consumption (e.g., advertisement viewing) habits. Such manually-obtained and automatically-obtained advertising information may then both be incorporated into the advertising profile. Thus, the advertising content control module(s) 465 may operate to develop an advertising profile by considering advertising preferences explicitly identified by a user and considering actual programming and/or advertising consumption by a user.

In such a scenario, the advertising content control module(s) 465 may, for example via the user interface module(s) 450, operate to provide the user the ability to review and/or override advertising profile settings due to automatic operation. Also in such a scenario, the advertising content control module(s) 465 may, for example, operate to provide for automatic override of advertising profile settings due to explicit user input.

An advertising profile may, for example, comprise default advertising settings and/or mandatory advertising settings. For example, in the absence of preferred advertising content, default advertising may be provided. Also for example, a content provider may mandate that particular types of advertising be presented regardless of preferences specified by a user or automatically determined by the system. In such a scenario, for example, an advertiser may pay the content provider a premium to ensure that particular advertising content will always be provided (e.g., to a particular premises, to particular equipment, to a particular user, to a particular group of users, etc.) regardless of user-specified and/or automatically-specified profile settings. Also in such a scenario, for example, a content provider may have the ability to always push down particular charity solicitations, political advertisements, and other mandatory content to an audience.

The advertising content control module(s) 465 may, for example, operate to store and/or maintain an advertising profile at a variety of different locations. For example, the advertising content control module(s) 465 may operate to store user advertising profile information locally at the user equipment 400 (e.g., in the memory 480). Also for example, the advertising content control module(s) may operate to store advertising profile information at user equipment that is not part of the media presentation system, but which is communicatively coupled thereto (e.g., communicatively coupled via the communication interface module(s) 410).

Additionally for example, the advertising content control module(s) 465 may operate to store advertising profile information at a site remote from a user's premises (e.g., at a central network server associated with a media communication company (e.g., a cable television provider, a satellite television provider, an Internet services provider, etc.) that provides media communication service to the user). The communication of such remotely stored information may, for example, be performed utilizing the communication interface module(s) 410. For example, the advertising content control module(s) 465 may operate to store and/or maintain the advertising profile information at a networked database maintained and/or controlled by a communication network provider. Also for example, the advertising content control module(s) 465 may (*e.g*., via the communication interface module(s) 410) operate to store and/or maintain the advertising profile information at a networked database maintained and/or controlled by a media provider (e.g., at a television programming head-end, etc.). Additionally for example, the advertising content control module(s) 465 may operate to store and/or maintain the user advertising profile information at a networked database maintained and/or controlled by an advertising content provider (e.g., an advertising agency). Such a networked database may also, for example, be maintained and/or controlled by a product/service provider corresponding to a consumer good and/or service being provided.

Note that the advertising content control module(s) 465 may operate to store the user advertising profile in a manner that allows access to such profile information when a user is away from the user's home (e.g., on business travel, on vacation, etc.). Also note that the advertising profile may be stored in a distributed manner, in which a portion is stored at a first location (e.g., in memory 480 of the user equipment 400) and a portion is stored at a second location (e.g., at a networked database).

Further note that the advertising content control module(s) 465 may operate to develop a plurality of profiles for a single user. For example, a first advertising profile may be associated with the user when the user is located at a home premises, and a second advertising profile may be associated with the user when the user is away from the home premises.

In general, the advertising content control module(s) 465 may operate to develop an advertising profile for a user. Accordingly, the scope of various aspects of the present invention should not be limited by characteristics of any particular manner of (or mechanism for) developing such an advertising profile or by any characteristics of such an advertising profile unless explicitly claimed

The advertising content control module(s) 465 may also, for example, operate to perform any or all of the advertising content selection functionality discussed previously with regard to step 130 of the exemplary method 100 illustrated in Figure 1 and with regard to step 230 of the exemplary method 200 illustrated in Figure 2.

Such operation may, for example, comprise communicating user identification information with the user identification module(s) 460. Such operation may also, for example, comprise accessing user advertising profile information (e.g., by interacting with the memory 480 to access locally-stored user advertising profile information, by interacting with remote entities via the communication interface module(s) 410 to access remotely-stored user advertising profile information, etc.).

Additionally for example, the advertising content control module(s) 465 may operate to perform any or all of the advertising content acquisition and/or presentation functionality discussed previously with regard to step 240 of the exemplary method 200 illustrated in Figure 2.

Such operation may, for example, comprise interacting with various system entities (e.g., local memory 480, external and/or remote entities via the communication interface module(s) 410, etc.) to acquire selected advertising content for presentation by the user equipment 400. Such operation may further for example comprise utilizing the record/playback manager module(s) 430 and/or the AN output signal processing module(s) 440 to present the acquired advertising content and to present associated non-advertising media.

Various modules of the user equipment 400 (e.g., the processor module(s) 470) may also operate to perform continued operation. For example, the user equipment 400 may operate to perform any or all functionality discussed previously with regard to step 195 of the exemplary method 100 illustrated in Figure 1 and with regard to step 295 of the exemplary method 200 illustrated in Figure 2 and discussed previously.

Turning next to Figure 5, such figure is a diagram illustrating exemplary modules and/or sub-modules for user equipment 500, in accordance with various aspects of the present invention. The exemplary user equipment 500 may share any or all aspects with any of the user equipment 310 and 400 discussed herein and illustrated in Figures 3 and 4. For example, the exemplary user equipment 500 (or various modules thereof) may operate to perform any or all functionality discussed herein with regard to the exemplary method 100 illustrated in Figure 1 and/or the exemplary method 200 illustrated in Figure 2.

As with the exemplary user equipment 400, the components of the exemplary user equipment 500 may be disposed in a single user device (e.g., a personal video recorder, a television receiver, a gaming device, a personal computing device, etc.). Also, as with the exemplary user equipment 400, various alternative embodiments may comprise the various modules, or a portion thereof, being disposed in other system entities (e.g., in network infrastructure and/or content provider equipment).

For example, the user equipment 500 comprises a processor 530. Such a processor 530 may, for example, share any or all characteristics with the processor(s) 470 discussed with regard to Figure 4. Also for example, the user equipment 500 comprises a memory 540. Such memory 540 may, for example, share any or all characteristics with the memory 480 discussed with regard to Figure 4.

Also for example, the user equipment 500 may comprise any of a variety of user interface module(s) 550. Such user interface module(s) 550 may, for example, share any or all characteristics with the user interface module(s) 450 discussed previously with regard to Figure 4. For example and without limitation, the user interface module(s) 550 may comprise: a display device, a camera (for still or moving picture acquisition), a speaker, an earphone (e.g., wired or wireless), a microphone, a video screen (e.g., a touch screen), a vibrating mechanism, a keypad, and/or any of a variety of other user interface devices (e.g., a mouse, a trackball, a touch pad, touch screen, light pen, game controlling device, etc.).

The exemplary user equipment 500 may also, for example, comprise any of a variety of communication modules (505, 506, and 510). Such communication module(s) may, for example, share any or all characteristics with the communication interface module(s) 410 discussed previously with regard to Figure 4. For example and without limitation, the communication interface module(s) 510 may comprise: a Bluetooth interface module; an IEEE 802.11, 802.15, 802.16 and/or 802.20 module; any of a variety of cellular telecommunication interface modules (e.g., GSM/GPRS/EDGE, CDMA/CDMA2000/lx-EV-DO, WCDMA/HSDPA/HSUPA, TDMA/PDC, WiMAX, etc.); any of a variety of position-related communication interface modules (e.g., GPS, A-GPS, etc.); any of a variety of wired/tethered communication interface modules (e.g., USB, Fire Wire, RS-232, HDMI, Ethernet, wire line and/or cable modem, etc.); any of a variety of communication interface modules related to communicating with external memory devices; etc. The exemplary user equipment 500 is also illustrated as comprising various wired 506 and/or wireless 505 front-end modules that may, for example, be included in the communication interface modules and/or utilized thereby.

The exemplary user equipment 500 may also comprise any of a variety of signal processing module(s) 590. Such signal processing module(s) 590 may share any or all characteristics with modules of the exemplary user equipment 400 that perform signal processing. Such signal processing module(s) 590 may, for example, be utilized to assist in processing various types of information discussed previously (e.g., with regard to sensor processing, position determination, video processing, image processing, audio processing, general user interface information data processing, etc.). For example and without limitation, the signal processing module(s) 590 may comprise: video/graphics processing modules (e.g. MPEG-2, MPEG-4, H.263, H.264, JPEG, TIFF, 3-D, 2-D, MDDI, etc.); audio processing modules (e.g., MP3, AAC, MIDI, QCELP, AMR, CMX, etc.); and/or tactile processing modules (e.g., keypad I/O, touch screen processing, motor control, etc.).

In summary, various aspects of the present invention provide a system and method for viewer identification-based advertising. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method for providing viewer identification-based advertising, the method comprising:
developing an advertising profile for a user;
identifying the user utilizing a media presentation system; and
selecting advertising for presentation by the media presentation system based, at least in part, on the advertising profile for the user and the identification of the user.

2. The method of claim 1, comprising presenting the selected advertising to the user.

3. The method of claim 1, wherein said developing an advertising profile for a user comprises receiving information from the user regarding advertising.

4. The method of claim 1, comprising storing the developed advertising profile in memory of user equipment.

5. The method of claim 1, wherein said identifying the user comprises identifying the user located in a media presentation envelope.

6. The method of claim 1, wherein said identifying the user comprises identifying the user based on user login.

7. The method of claim 1, wherein said identifying the user comprises identifying the user at a time associated with an advertising break in media being presented to the user.

8. The method of claim 1, wherein said identifying the user comprises identifying the user periodically.

9. The method of claim 1, wherein said identifying the user comprises identifying the user as being nearest to the media presentation system.

10. The method of claim 1, wherein said selecting advertising comprises selecting advertising for presentation by the media presentation system based on only a single user.

11. A system for providing view identification-based advertising, the system comprising:
at least one module operable to, at least:
develop an advertising profile for a user;
identify the user utilizing a media presentation system; and
select advertising for presentation by the media presentation system based, at least in part, on the advertising profile for the user and the identification of the user.

12. The system of claim 11, wherein said at least one module is operable to present the selected advertising to the user.

13. The system of claim 11, wherein said at least one module is operable to develop an advertising profile for a user by, at least in part, operating to receive information from the user regarding advertising.

14. The system of claim 11, where said at least one module is operable to store the developed advertising profile in memory of user equipment.

15. The system of claim 11, wherein said at least one module is operable to identify the user by, at least in part, operating to identify the user located in a media presentation envelope.
